# EUROPEAN PATENT APPLICATION

(11) **EP 4 446 571 A1**
(43) Date of publication of application: **16.10.2024**
(21) Application number: 22902639.8
(22) Date of filing: 11.03.2022
(51) Int. Cl.: F01K 7/22, F01K 11/02

(54) **DYNAMICALLY-RECONFIGURABLE STEAM TURBINE GENERATOR SET AND OPERATION METHOD**

(30) Priority: 07.12.2021 CN 202111483362
(71) Applicant: Jinan University, Tianhe District Guangzhou Guangdong 510632 (CN)
(72) Inventor: WANG, Weiliang, Zhuhai, Guangdong 519000 (CN); LV, Junfu, Zhuhai, Guangdong 519000 (CN)
(74) Representative: Zaboliene, Reda
(86) International application number: PCT/CN2022/080279
(87) International publication number: WO 2023/103195

(57) **Abstract**

The present disclosure provides a dynamically reconstruction turbine generator unit and an operation method, the turbine generator unit comprising a high pressure compensating pressure stage and/or a medium pressure compensating pressure stage, and first dividing the operating load conditions of the turbine unit, under high load conditions, the conventional high pressure cylinder and medium pressure cylinder are put into operation, and the high pressure compensating pressure stage and/or medium pressure compensating pressure stage are idled or shut down; under low load conditions, the high pressure compensating pressure stage operates in series with the high pressure cylinder, and/or the medium pressure compensating pressure stage operates in series with the medium pressure cylinder. By connecting pressure stages in series in the flow system, the work process is added and a higher unit operating pressure is maintained through pressure transfer.

## Description

### TECHNICAL FIELD

The present disclosure herein belongs to the field of turbine power generation technology, and particularly relates to a dynamically reconstruction turbine generator unit and an operation method thereof.

### BACKGROUND

The "dual-carbon" strategy promotes the construction of a new power system with new energy as the main source, and with the large-scale grid integration of new energy sources such as photovoltaic and wind power with stochastic volatility, coal-fired thermal power as the main source of basic power is forced to participate in deep peaking in a comprehensive manner. Coal-fired thermal power unit design is mainly considered under the rated load operating efficiency, in the process of deep peaking, the power efficiency of the unit under medium and low load conditions deteriorates dramatically, compared to the rated load conditions, conventional coal-fired thermal power units 30% rated load conditions, coal consumption increased by 30-40g/kW • h, which is directly attributable to the main steam pressure "fixed-slip-fixed" mode of operation, the main steam pressure is greatly reduced under the low and medium load conditions, which directly leads to the reduction of thermal system cycle efficiency, and at the same time also increases the turbine body flow exergy loss.

In the prior art, once the manufacturing and installation of a turbine unit is completed, its structural connection state is finalized, and each pressure cylinder can only operate in accordance with the established state. Since each pressure cylinder is designed for the full load conditions, when the turbine unit operates under the low and medium load conditions, due to the drop in the operating pressure of the main steam, the structure of the turbine unit is unable to be reconstructed, which ultimately leads to the sharp deterioration of the energy efficiency in the process of deep peaking.

### SUMMARY

In order to overcome the deficiencies of the prior art, an object of the present disclosure is to provide a dynamically reconstruction turbine generator unit and an operation method, which are mainly used to solve the problems of sharp deterioration of energy efficiency caused by the fact that the structural connection state of the turbine unit cannot be adaptively reconstructed in accordance with changes of the load conditions when the turbine unit operates under low and medium load conditions in the prior art.

In order to solve the above problems, the technical solutions adopted in the present disclosure are as follows:

the first point of the present disclosure is to provide a dynamically reconstruction turbine generator unit, comprising a boiler, a first rotating shaft, a high pressure cylinder and a medium pressure cylinder, wherein a main steam outlet end of the boiler is connected to a steam inlet end pipeline of the high pressure cylinder through a main steam pipeline, the main steam pipeline is provided with a main steam valve, a steam exhaust outlet end of the high pressure cylinder is connected to a reheat steam inlet end pipeline of the boiler through a cold reheated steam pipeline, a reheated steam outlet end of the boiler is connected to the steam inlet end pipeline of the medium pressure cylinder through a reheated steam pipeline, the reheated steam pipeline is provided with a fourth valve, the high pressure cylinder and the medium pressure cylinder are arranged sequentially along the direction of the center axis of the first rotating shaft;

further comprising a second rotating shaft, a high pressure compensation pressure stage and an energy conversion device, the high pressure compensation pressure stage and the energy conversion device is arranged sequentially along the direction of the center axis of the second rotating shaft, a first valve is provided between the main steam valve and the high pressure cylinder, a second valve is provided between the main steam valve and the high pressure compensation pressure stage, the steam exhaust outlet end of the high pressure compensation pressure stage is connected to the steam outlet end pipeline of the first valve through a third valve and then connected to the steam inlet end pipeline of the high pressure cylinder.

A second point of the present disclosure is to provide a dynamically reconstruction turbine generator unit, comprising a boiler, a first rotating shaft, a high pressure cylinder and a medium pressure cylinder, wherein a main steam outlet end of the boiler is connected to a steam inlet end pipeline of the high pressure cylinder through a main steam pipeline, the main steam pipeline is provided with a main steam valve, a steam exhaust outlet end of the high pressure cylinder is connected to a reheat steam inlet end pipeline of the boiler through a cold reheated steam pipeline, a reheated steam outlet end of the boiler is connected to the steam inlet end pipeline of the medium pressure cylinder through a reheated steam pipeline, the reheated steam pipeline is provided with a fourth valve, the high pressure cylinder and the medium pressure cylinder are arranged sequentially along the direction of the center axis of the first rotating shaft;

further comprising a second rotating shaft, a medium pressure compensating pressure stage and an energy conversion device, the medium pressure compensating pressure stage and the energy conversion device is arranged sequentially along the direction of the center axis of the second rotating shaft, the steam inlet end of the medium pressure compensating pressure stage is connected to the steam inlet end pipeline of the fourth valve through a fifth valve, the steam exhaust outlet end of the medium pressure compensating pressure stage is connected to the steam outlet end pipeline of the fourth valve through a sixth valve, and then connected to the steam inlet end pipeline of the medium pressure cylinder.

The third point of the present disclosure is to provide a dynamically reconstruction turbine generator unit, comprising a boiler, a first rotating shaft, a high pressure cylinder and a medium pressure cylinder, wherein a main steam outlet end of the boiler is connected to a steam inlet end pipeline of the high pressure cylinder through a main steam pipeline, the main steam pipeline is provided with a main steam valve, a steam exhaust outlet end of the high pressure cylinder is connected to a reheat steam inlet end pipeline of the boiler through a cold reheated steam pipeline, a reheated steam outlet end of the boiler is connected to the steam inlet end pipeline of the medium pressure cylinder through a reheated steam pipeline, the reheated steam pipeline is provided with a fourth valve, the high pressure cylinder and the medium pressure cylinder are arranged sequentially along the direction of the center axis of the first rotating shaft;

further comprises a second rotating shaft, a high pressure compensation pressure stage, a medium pressure compensation pressure stage and an energy conversion device, the high pressure compensation pressure stage, the medium pressure compensation pressure stage and the energy conversion device are arranged sequentially along the direction of the center axis of the second rotating shaft, a first valve is provided between the main steam valve and the high pressure cylinder, a second valve is provided between the main steam valve and the high pressure compensation pressure stage, the steam exhaust outlet end of the high pressure compensation pressure stage is connected to the steam outlet end pipeline of the first valve through a third valve, and then connected to the steam inlet end pipeline of the high pressure cylinder; the steam inlet end of the medium pressure compensation pressure stage is connected to the steam inlet end pipeline of the fourth valve through a fifth valve, the steam exhaust outlet end of the medium pressure compensation pressure stage is connected to the steam outlet end pipeline of the fourth valve through a sixth valve, and then connected to the steam inlet end pipeline of the medium pressure cylinder.

Furthermore, the loading rate of the first state reconstruction point of the turbine generator unit is set to be n%, and the flow area of the high pressure compensating pressure stage is 0.4n% to 1.5n% of the flow area of the high pressure cylinder.

Furthermore, the loading rate of the second state reconstruction point of the turbine generator unit is set to be m%, and the flow area of the medium pressure compensating pressure stage is 0.4m% to 1.5m% of the flow area of the medium pressure cylinder.

A fourth point of the present disclosure is to provide a method of operating the dynamically reconstruction turbine generator unit in the first or third point of the present disclosure above, wherein under high load conditions, the first valve is opened, the second valve and the third valve are closed, whereby the high pressure compensating pressure stage idles or shuts down; and
under low load conditions, the second valve and the third valve are opened, the first valve is closed, whereby the high pressure compensating pressure stage operates in series with the high pressure cylinder.

A fifth point of the present disclosure is to provide a method of operating the dynamically reconstruction turbine generator unit in the second or third point of the present disclosure above, wherein under high load conditions, the fourth valve is opened, the fifth valve and the sixth valve are closed, whereby the medium pressure compensating pressure stage idles or shuts down; and
under low load conditions, the fifth valve and the sixth valve are opened, the fourth valve is closed, whereby the medium pressure compensating pressure stage operates in series with the medium pressure cylinder.

A sixth point of the present disclosure is to provide a method of operating the dynamically reconstruction turbine generator unit in the third point of the present disclosure above, wherein under high load conditions, the first valve and the fourth valve are opened, the second valve, the third valve, the fifth valve and the sixth valve are closed, whereby the high pressure compensating pressure stage and the medium pressure compensating pressure stage are idled or shut down; and
under low load conditions, the second valve, the third valve, the fifth valve and the sixth valve are opened, the first valve and fourth valve are closed, whereby the high pressure compensating pressure stage operates in series with the high pressure cylinder, and the medium pressure compensating pressure stage operates in series with the medium pressure cylinder.

Furthermore, the high load conditions is not less than 70% of the rated load conditions.

Furthermore, the low load conditions is 10% to 70% of the rated load conditions.

Compared to the prior art, the present disclosure includes at least the following beneficial effects:
to divide the operating load conditions of the turbine unit, under high load conditions, the conventional high pressure cylinder and medium pressure cylinder are put into operation, and the high pressure compensating pressure stage and/or medium pressure compensating pressure stage are idled or shut down, so as to reduce the flow area and avoid the main steam pressure from dropping significantly during the sliding pressure operation of the turbine unit; under low load conditions, the high pressure compensating pressure stage operates in series with the high pressure cylinder, and/or the medium pressure compensating pressure stage operates in series with the medium pressure cylinder. By connecting pressure stages in series in the flow system, the work process is added and a higher unit operating pressure is maintained through pressure transfer. According to the operating load conditions, the flow state of the dynamically reconstruction turbine unit is designed to avoid the problem of a sharp drop in energy efficiency due to a drop in the operating pressure of the main reheat steam under low and medium load conditions, and to improve the adaptability of the turbine unit to the operating conditions.

The present disclosure is described in further detail below in connection with the accompanying drawings and specific embodiments.

### BRIEF DESCRIPTION OF THE DRAWINGS

The present disclosure is further illustrated using the accompanying drawings, but the examples in the accompanying drawings do not constitute any limitation of the present disclosure, and others may be obtained by those of ordinary skill in the art without creative labor according to the following accompanying drawings.
FIG. 1 is a schematic diagram of a structure of a dynamically reconstruction turbine generator unit provided in the Example 1.
FIG. 2 is a schematic diagram of a structure of a dynamically reconstruction turbine generator unit provided in the Example 2.
FIG. 3 is a schematic diagram of a structure of a dynamically reconstruction turbine generator unit provided in the Example 3.
FIG. 4 is a schematic diagram of a structure of a dynamically reconstruction turbine generator unit provided in the Example 4.
FIG. 5 is a schematic diagram of the standard coal consumption of a 330 MW conventional thermal power unit under the full load conditions.
FIG. 6 is a schematic diagram of the back pressure of the regulating stage and the main steam pressure change of a 330 MW conventional thermal power unit under the full load conditions.
FIG. 7 is a schematic diagram of the variation of main steam pressure with load for the dynamically reconstruction turbine generator unit and the turbine generator unit in conventional operation mode applied in the Example 9.
FIG. 8 is a schematic diagram of the standard coal consumption under the full load conditions for the dynamically reconstruction turbine generator unit and the turbine generator unit in conventional operation mode applied in the Example 9.

The accompanying drawings are labeled to illustrate: 1, first rotating shaft; 2, second rotating shaft; 3, high pressure cylinder; 4, medium pressure cylinder; 5, low pressure cylinder; 6, generator; 7, high pressure compensating pressure stage; 8, medium pressure compensating pressure stage; 9, energy conversion device; 10, condenser; 11, feed water pump; 12, boiler; 13, main steam valve; 14, first valve; 15, second valve; 16, third valve; 17, fourth valve; 18, fifth valve; 19, sixth valve ; 20, seventh valve; 21, condensate pump; 22, low pressure feedwater heater; 23, deaerator; 24, high pressure feedwater heater.

### DETAILED DESCRIPTION OF THE EMBODIMENTS

The technical solution of the present disclosure will be described clearly and completely in the following in conjunction with the accompanying drawings, and it is obvious that the described examples are a part of the examples of the present disclosure and not all of the examples. Based on the examples in the present disclosure, all other examples obtained by a person of ordinary skill in the art without making creative labor fall within the scope of protection of the present disclosure.

In the description of the present disclosure, it should be noted that the terms "center", "up", "down", "left", "right", "vertical", "horizontal", "inside", "outside", etc. indicate that the orientation or position relationship based on the orientation or position relationship shown in the accompanying drawings is only for the convenience of describing the present disclosure and simplifying the description, rather than indicating or implying that the device or element referred to must have a specific orientation, be constructed and operated in a specific orientation, and therefore cannot be understood as a limitation of the present disclosure. In addition, the terms "first," "second," and "third" are only used to describe the purpose and cannot be understood as indicating or implying relative importance.

In the description of the present disclosure, when a particular device is described as being disposed between a first device and a second device, there may or may not be an interstitial device between the particular device and the first device or the second device. When it is described that a particular device connects to other devices, the particular device may be directly connected to the other devices without having an interstitial device, or it may not be directly connected to the other devices and have an interstitial device.

Techniques, methods and apparatus known to a person of ordinary skilled in the relevant art may not be discussed in detail, but where appropriate, the techniques, methods and apparatus should be considered part of the specification.

### Example 1:

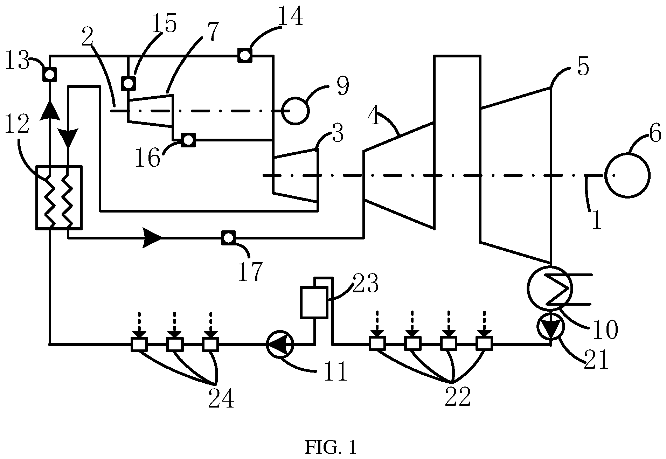

Referring to FIG. 1, the Example 1 provides a dynamically reconstruction turbine generator unit, comprising a boiler 12, a first rotating shaft 1, a high pressure cylinder 3 and a medium pressure cylinder 4, wherein a main steam outlet end of the boiler 12 is connected to a steam inlet end pipeline of the high pressure cylinder 3 through a main steam pipeline, the main steam pipeline is provided with a main steam valve 13, a steam exhaust outlet end of the high pressure cylinder 3 is connected to a reheat steam inlet end pipeline of the boiler 12 through a cold reheated steam pipeline, a reheated steam outlet end of the boiler 12 is connected to the steam inlet end pipeline of the medium pressure cylinder 4 through a reheated steam pipeline, the reheated steam pipeline is provided with a fourth valve 17, the high pressure cylinder 3 and the medium pressure cylinder 4 are arranged sequentially along the direction of the center axis of the first rotating shaft 1;
further comprising a second rotating shaft 2, a high pressure compensation pressure stage 7 and an energy conversion device 9, the high pressure compensation pressure stage 7 and the energy conversion device 9 is arranged sequentially along the direction of the center axis of the second rotating shaft 2, a first valve 14 is provided between the main steam valve 13 and the high pressure cylinder 3, a second valve 15 is provided between the main steam valve 13 and the high pressure compensation pressure stage 7, the steam exhaust outlet end of the high pressure compensation pressure stage 7 is connected to the steam outlet end pipeline of the first valve 14 through a third valve 16 and then connected to the steam inlet end pipeline of the high pressure cylinder 3 pipeline, which is equivalent to the inlet end and outlet end of the first valve 14, connected in parallel with the high pressure compensation pressure stage 7, when the second valve 15 and the third valve 16 at both ends of the high pressure compensation pressure stage 7 are closed and the first valve 14 is open, the main steam through the main steam valve 13, the first valve 14 into the steam inlet end of the high pressure cylinder 3 in turn, which is suitable for the operation under high load conditions; when the second valve 15 and the third valve 16 at both ends of the high pressure compensation pressure stage 7 are open and the first valve 14 is closed, the main steam through the main steam valve 13, the second valve 15, the high pressure compensation pressure stage 7 and the third valve 16 into the steam inlet end of the high pressure cylinder 3, which is equivalent to the operation of the high pressure compensation pressure stage 7 in series with the high pressure cylinder 3, which is suitable for the operation under low load conditions.

In summary, it can be obtained that the turbine unit in the Example 1 has two power units, the high pressure cylinder 3 and the high pressure compensation pressure stage 7, in the high pressure part, and can be switched to different connection states in accordance with different loading conditions, so as to realize the dynamic reconstruction of the turbine unit.

### Example 2:

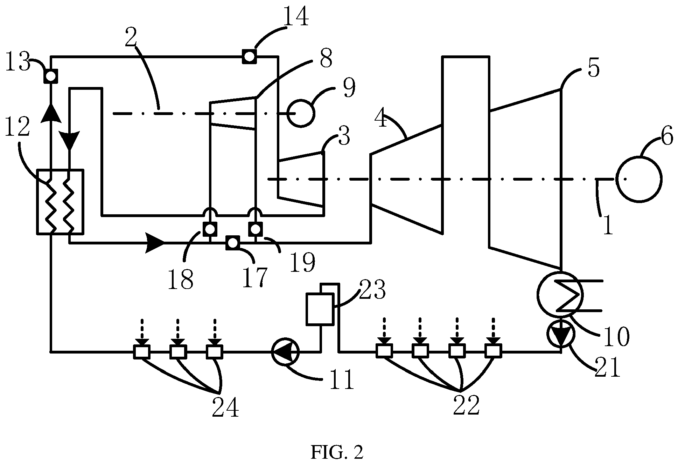

Referring to FIG. 2, the Example 2 provides a dynamically reconstruction turbine generator unit, comprising a boiler 12, a first rotating shaft 1, a high pressure cylinder 3 and a medium pressure cylinder 4, wherein a main steam outlet end of the boiler 12 is connected to a steam inlet end pipeline of the high pressure cylinder 3 through a main steam pipeline, the main steam pipeline is provided with a main steam valve 13, a steam exhaust outlet end of the high pressure cylinder 3 is connected to a reheat steam inlet end pipeline of the boiler 12 through a cold reheated steam pipeline, a reheated steam outlet end of the boiler 12 is connected to the steam inlet end pipeline of the medium pressure cylinder 4 through a reheated steam pipeline, the reheated steam pipeline is provided with a fourth valve 17, the high pressure cylinder 3 and the medium pressure cylinder 4 are arranged sequentially along the direction of the center axis of the first rotating shaft 1;
further comprising a second rotating shaft 2, a medium pressure compensating pressure stage 8 and an energy conversion device 9, the medium pressure compensating pressure stage 8 and the energy conversion device 9 is arranged sequentially along the direction of the center axis of the second rotating shaft 2, the steam inlet end of the medium pressure compensating pressure stage 8 is connected to the steam inlet end pipeline of the fourth valve 17 through a fifth valve 18, the steam exhaust outlet end of the medium pressure compensating pressure stage 8 is connected to the steam outlet end pipeline of the fourth valve 17 through a sixth valve 19, and then connected to the steam inlet end pipeline of the medium pressure cylinder 4, which is equivalent to the inlet end and outlet end of the fourth valve 17, connected in parallel with the medium pressure compensation pressure stage 8, when the fifth valve 18 and the sixth valve 19 at both ends of the medium pressure compensation pressure stage 8 are closed and the fourth valve 17 is open, the reheat steam through the fourth valve 17 into the steam inlet end of the medium pressure cylinder 4 in turn, which is suitable for the operation under high load conditions; when the fifth valve 18 and the sixth valve 19 at both ends of the medium pressure compensation pressure stage 8 are open and the fourth valve 17 is closed, the reheat steam through the fifth valve 18, the medium pressure compensation pressure stage 8 and the sixth valve 19 into the steam inlet end of the medium pressure cylinder 4, which is equivalent to the operation of the medium pressure compensation pressure stage 8 in series with the medium pressure cylinder 4, which is suitable for the operation under low load conditions.

In summary, it can be obtained that the turbine unit in the Example 2 has two power units, the medium pressure cylinder 4 and the medium pressure compensating pressure stage 8, in the medium pressure part, and can be switched to different connection states in accordance with different loading conditions, so as to realize the dynamic reconstruction of the turbine unit.

### Example 3:

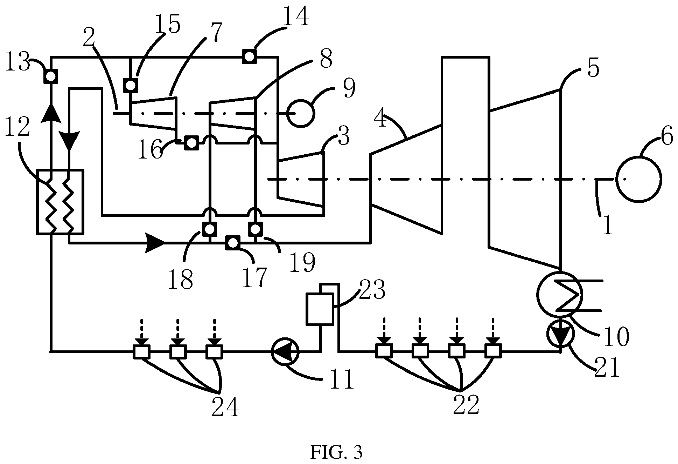

Referring to FIG. 3, the Example 3 provides a dynamically reconstruction turbine generator unit, comprising a boiler 12, a first rotating shaft 1, a high pressure cylinder 3 and a medium pressure cylinder 4, wherein a main steam outlet end of the boiler 12 is connected to a steam inlet end pipeline of the high pressure cylinder 3 through a main steam pipeline, the main steam pipeline is provided with a main steam valve 13, a steam exhaust outlet end of the high pressure cylinder 3 is connected to a reheat steam inlet end pipeline of the boiler 12 through a cold reheated steam pipeline, a reheated steam outlet end of the boiler 12 is connected to the steam inlet end pipeline of the medium pressure cylinder 4 through a reheated steam pipeline, the reheated steam pipeline is provided with a fourth valve 17, the high pressure cylinder 3 and the medium pressure cylinder 4 are arranged sequentially along the direction of the center axis of the first rotating shaft 1;
further comprises a second rotating shaft 2, a high pressure compensation pressure stage 7, a medium pressure compensation pressure stage 8 and an energy conversion device 9, the high pressure compensation pressure stage 7, the medium pressure compensation pressure stage 8 and the energy conversion device 9 are arranged sequentially along the direction of the center axis of the second rotating shaft 2, a first valve 14 is provided between the main steam valve 13 and the high pressure cylinder 3, a second valve 15 is provided between the main steam valve 13 and the high pressure compensation pressure stage 7, the steam exhaust outlet end of the high pressure compensation pressure stage 7 is connected to the steam outlet end pipeline of the first valve 14 through a third valve 16, and then connected to the steam inlet end pipeline of the high pressure cylinder 3; the steam inlet end of the medium pressure compensation pressure stage 8 is connected to the steam inlet end pipeline of the fourth valve 17 through a fifth valve 18, the steam exhaust outlet end of the medium pressure compensation pressure stage 8 is connected to the steam outlet end pipeline of the fourth valve 17 through a sixth valve 19, and then connected to the steam inlet end pipeline of the medium pressure cylinder 4.

The Example 3 corresponds to the fusion of Example 1 and Example 2 by adding a high pressure compensating pressure stage 7 to the high pressure part and a medium pressure compensating pressure stage 8 to the medium pressure part, respectively.

At both ends of the inlet end and outlet end of the first valve 14, a high pressure compensation pressure stage 7 is connected in parallel, and at both ends of the inlet end and outlet end of the fourth valve 17, a medium pressure compensation pressure stage 8 is connected in parallel, and when operating under high load conditions, the second valve 15 and the third valve 16 at both ends of the high pressure compensation pressure stage 7 are closed, the first valve 14 is opened, the main steam through the main steam valve 13 and the first valve 14 into the steam inlet end of the high pressure cylinder 3 in turn, in addition, the fifth valve 18 and the sixth valve 19 at both ends of the medium pressure compensation pressure stage 8 are closed, the fourth valve 17 is open, the reheat steam through the fourth valve 17 into the steam inlet end of the medium pressure cylinder 4 in turn; when operating under low load conditions, the second valve 15 and the third valve 16 at both ends of the high pressure compensation pressure stage 7 are opened, the first valve 14 is closed, the main steam through the main steam valve 13, the second valve 15, high pressure compensation pressure stage 7 and the third valve 16 into the steam inlet end of the medium pressure cylinder 4 in turn, which is equivalent to the operation of the high pressure compensation pressure stage 7 in series with the high pressure cylinder 3, in addition, the fifth valve 18 and the sixth valve 19 at both ends of the medium pressure compensation pressure stage 8 are oped, the fourth valve 17 is closed, the reheat steam through the fifth valve 18, medium pressure compensation pressure stage 8 and the sixth valve 19 into the steam inlet end of the medium pressure cylinder 4 in turn, which is equivalent to the operation of the medium pressure compensation pressure stage 8 in series with the medium pressure cylinder 4.

### Example 4:

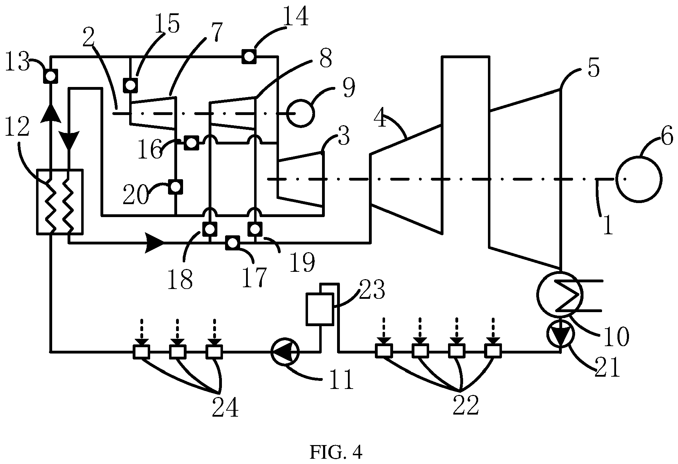

Referring to FIG. 4, in the Example 4, a seventh valve 20 is added on the basis of Example 1 or 3, and more specifically, the steam exhaust outlet end of the high pressure compensating pressure stage 7 is connected to the reheat steam inlet end pipeline of the boiler 12 through the seventh valve 20;, when under full load conditions, the first valve 14, the second valve 15, and the seventh valve 20 are opened, the third valve 16 is closed,, whereby the high pressure compensating pressure stage 7 and the high pressure cylinder 3 are connected in parallel, the main steam coming out of the boiler 12 is divided into two and enters the high pressure compensation pressure stage 7 and the high pressure cylinder 3, respectively, and then the outlet steam of the high pressure compensation pressure stage 7 and the high pressure cylinder 3 is summed up and then entered into the boiler 12 together for reheating, further improving the working capacity of the turbine unit under the full load conditions. It should be noted that the seventh valve 20 is opened only under the full load conditions and the third valve 16 is closed to realize parallel operation, and the seventh valve 20 is normally closed under the remaining high load conditions and low load conditions.

Additionally, as a further improvement of Example 1 to Example 3, a high pressure cylinder 3, a medium pressure cylinder 4, a low pressure cylinder 5 and a generator 6 are arranged in the direction of the center axis of the first rotating shaft 1 in sequence, the steam exhaust outlet end of the low pressure cylinder 5 is connected to a condenser 10, and the condensate outlet end of the condenser 10 is connected to a condensate pump 21, a low pressure feedwater heater 22, a deaerator 23, a feed pump 11, a high pressure feedwater heater 24 and a boiler 12 feed water outlet, thereby forming a cycle.

In some examples, the loading rate of the first state reconstruction point of the turbine generator unit is set to be n%, and the flow area of the high pressure compensating pressure stage 7 is 0.4n% to 1.5n% of the flow area of the high pressure cylinder 3; the loading rate of the second state reconstruction point of the turbine generator unit is set to be m%, and the flow area of the medium pressure compensating pressure stage 8 is 0.4m% to 1.5m% of the flow area of the medium pressure cylinder 4.

It is to be noted that, wherein the values of n and m can be the same or different, and their values range from 30% to 70%, the first state reconstruction point determines at which load rate the high pressure compensating pressure stage 7 is put into operation and operated in series with the high pressure cylinder 3, and the second state reconstruction point determines at which load rate the medium pressure compensating pressure stage 8 is put into operation and operated in series with the medium pressure cylinder 4; at a load rate of 30% to 70%, the operating pressure of the turbine unit drops significantly, whereby within this load range, it is necessary to connect high-pressure compensation pressure stage 7 and/or medium pressure compensation pressure stage 8 in series to top up the operating pressure.

### Example 5:

the Example 5 provides an operation method applied to the dynamically reconstruction turbine generator unit in the above Example 1 or Example 2, wherein high load conditions and low load conditions are firstly divided and defined, under high load conditions, the first valve 14 is opened, the second valve 15 and the third valve 16 are closed, according to the load conditions, the high pressure compensating pressure stage 7 idles or shuts down, wherein idling, i.e., hot standby, is performed, and the flow structure between the high pressure compensating pressure stage 7 and the high pressure cylinder 3 is closed, and the main steam is directly sent from the boiler 12 outlet main steam pipeline to the high pressure cylinder 3 to expand and do work, and the low pressure steam is discharged from the steam exhaust outlet end of the high pressure cylinder 3 and sent to the reheat steam inlet end of the boiler 12, which reduces the flow area of the high pressure part and avoids the main steam pressure from dropping significantly during the sliding pressure operation under high load conditions;
under low load conditions, the second valve 15 and the third valve 16 are opened, the first valve 14 is closed, whereby the high pressure compensating pressure stage 7 operates in series with the high pressure cylinder 3, the main steam is sent from the boiler 12 outlet main steam pipeline to the high pressure compensation pressure stage 7 to expand and do work, high pressure compensation pressure stage 7 drives the energy conversion device 9 through the second rotating shaft 2; after doing work, the steam is discharged from the steam exhaust outlet end of the high pressure compensation pressure stage 7, and flows to the steam inlet end of the high pressure cylinder 3 to continue to expand and do work, and then the low pressure steam is discharged from the steam exhaust outlet end of the high pressure cylinder 3 to the reheat steam inlet end of the boiler 12; by operating the high pressure compensation pressure stage 7 in series with the high pressure cylinder 3, the work process is added and a higher unit operating pressure is maintained through pressure transfer.

### Example 6:

the Example 6 provides an operation method applied to a dynamically reconstruction turbine generator unit in the above Example 2 or Example 3, wherein high load conditions and low load conditions, under high load conditions, the fourth valve 17 is opened, the fifth valve 18 and the sixth valve 19 are closed, according to the load conditions, the medium pressure compensating pressure stage 8 idles or shuts down, wherein idling, i.e., hot standby, is performed, and the flow structure between the medium pressure compensating pressure stage 8 and the medium pressure cylinder 4 is closed, and reheated steam is sent from the reheated steam outlet end of the boiler 12 through a pipeline directly sent to the medium pressure cylinder 4 to expand and do work, and the low pressure steam is discharged from the steam exhaust outlet end of the medium pressure cylinder 4 and sent to the steam inlet end of the low pressure cylinder 5, which reduces the flow area of the medium pressure part and improves the main steam pressure of the unit for sliding pressure operation;
under low load conditions, the fifth valve 18 and the sixth valve 19 are opened, the fourth valve 17 is closed, whereby the medium pressure compensating pressure stage 8 operates in series with the medium pressure cylinder 4, the reheated steam is discharged from the reheated steam outlet end of the boiler 12 and sent through the pipeline to the medium pressure compensation pressure stage 8 to expand and do work, and the medium pressure compensation pressure stage 8 drives the energy conversion device 9 through the second rotating shaft 2; after doing work, the steam is discharged from the steam exhaust outlet end of the medium pressure compensation pressure stage 8, flows to the steam inlet end of the medium pressure cylinder 4 to continue to expand and do work, and then the low pressure steam is discharged from the steam exhaust outlet end of the medium pressure cylinder 4 to the low pressure cylinder 5; by operating the medium pressure compensation pressure stage 8 in series with the medium pressure cylinder 4, the work process is added and a higher unit operating pressure is maintained through pressure transfer.

### Example 7:

the Example 7 provides an operation method applied to the dynamically reconstruction turbine generator unit in the above Example 3, high load conditions and low load conditions are firstly divided and defined, under high load conditions, the first valve 14 and the fourth valve 17 are opened, the second valve 15, the third valve 16, the fifth valve 18 and the sixth valve 19 are closed, whereby the high pressure compensating pressure stage 7 and the medium pressure compensating pressure stage 8 are idled or shut down, the flow structure between the high pressure compensation pressure stage 7 and the high pressure cylinder 3 is closed, and the flow structure between the medium pressure compensation pressure stage 8 and the medium pressure cylinder 4 is closed, and the main steam is directly sent from the boiler 12 outlet main steam pipeline to the high pressure cylinder 3 to expand and do work, and the low pressure steam is discharged from the steam exhaust outlet end of the high pressure cylinder 3 and sent to the reheat steam inlet end of the boiler 12, the reheated steam is directly sent from the reheated steam outlet end of the boiler 12 to the medium pressure cylinder 4 through the pipeline to expand and do work, the low pressure steam is discharged from the steam exhaust outlet end of the medium pressure cylinder 4 and sent to the steam inlet end of the low pressure cylinder 5, which reduces the flow area between the high pressure and medium pressure parts and avoids the main steam pressure from dropping significantly during the sliding-pressure operation under high load conditions, and improves the main steam pressure of the unit during slip pressure operation;
under low load conditions, the second valve 15, the third valve 16, the fifth valve 18 and the sixth valve 19 are opened, the first valve 14 and fourth valve 17 are closed, whereby the high pressure compensating pressure stage 7 operates in series with the high pressure cylinder 3, and the medium pressure compensating pressure stage 8 operates in series with the medium pressure cylinder 4;
the main steam from the boiler 12 main steam pipeline to the high pressure compensation pressure stage 7 to expand and do work, the high pressure compensation pressure stage 7 drives energy conversion device 9 through the second rotating shaft 2; after doing work, the steam is discharged from the steam exhaust outlet end of the high pressure compensation pressure stage 7, and flows to the steam inlet end of the high pressure cylinder 3 to continue to expand and do work, and then the low pressure steam is discharged from the steam exhaust outlet end of the high pressure cylinder 3 to the reheat steam inlet end of the boiler 12, the reheat steam is discharged from the reheat steam outlet end of boiler 12 and sent through the pipeline to the medium pressure compensation pressure stage 8 to expand and do work, and the medium pressure compensation pressure stage 8 drives the energy conversion device 9 through the second rotating shaft 2; after doing work, steam is discharged from the steam exhaust outlet end of the medium pressure compensation pressure stage 8, and flows to the steam inlet end of medium pressure cylinder 4 to continue to expand and do work, and then the low pressure steam is discharged from the steam exhaust outlet end of the medium pressure cylinder 4 to the low pressure cylinder 5; by operating the high pressure compensation pressure stage 7 in series with the high pressure cylinder 3, and the medium pressure compensation pressure stage 8 in series with the medium pressure cylinder 4, the work process is added and a higher unit operating pressure is maintained through pressure transfer.

In the above example, under the low load conditions, the unit operation effect is equivalent to the addition of the steam work process, and compared with the conventional unit, the unit operation pressure in the example can be effectively improved, therefore, significantly improving the unit cycle efficiency and power generation energy efficiency.

In some examples, high load conditions is not less than 70% of the rated load conditions, preferably 70% to 90%, and low load conditions is 10% to 70% of the rated load conditions.

### Example 8:

In the Example 8, the dynamically reconstruction turbine generator unit applied in Example 4, under 90-100% full load conditions, the high pressure compensation pressure stage 7 can be operated in parallel with the high pressure cylinder 3, i.e., by opening the first valve 14, the second valve 15, and the seventh valve 20, and closing 16 the third valve;

### Example 9:

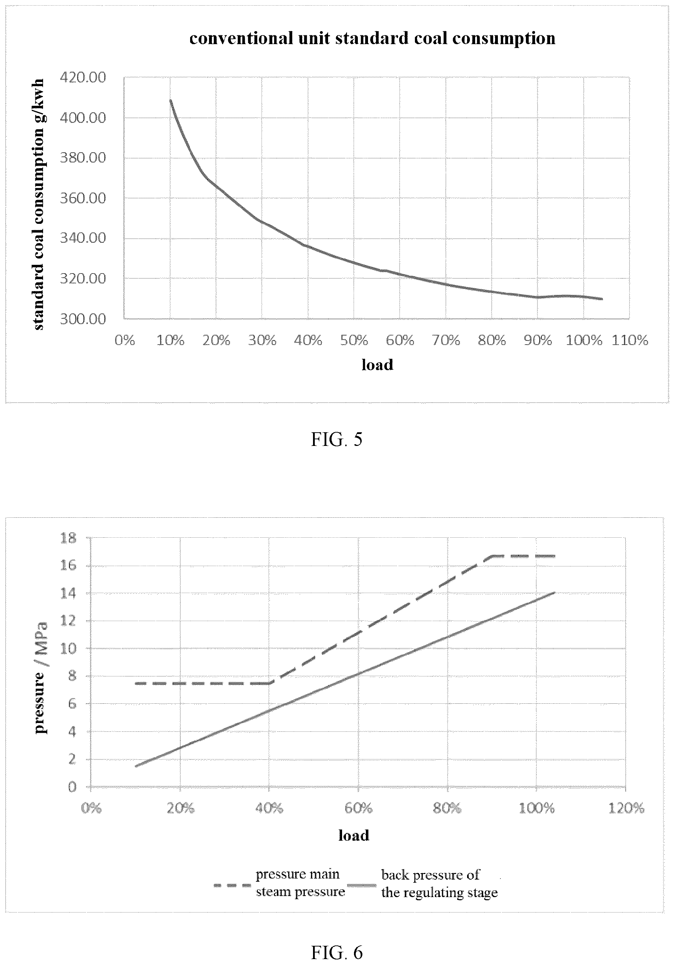

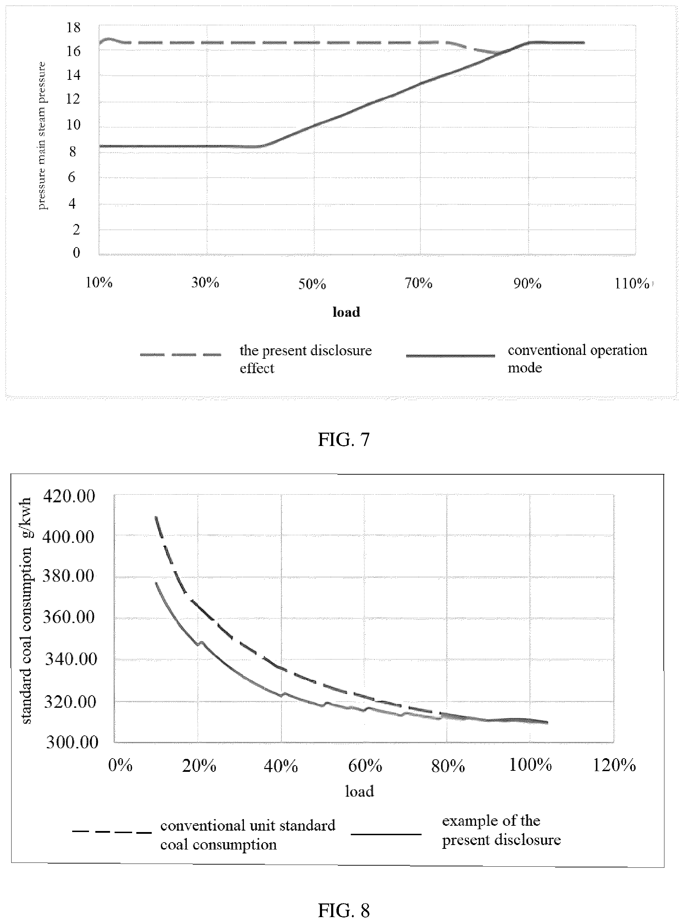

taking a 330MW thermal power unit as an example, FIG. 5 shows the standard coal consumption of a 330MW conventional thermal power unit under full load conditions, and FIG. 6 shows a schematic diagram of the back pressure of the regulating stage and the variation of the "fixed-slip-fixed" main steam pressure of the 330MW conventional thermal power unit under full load conditions. In the Example 9, by applying the dynamically reconstruction turbine generator unit technology of the present disclosure, the turbine flow structure can be reconstructed and adjusted to maintain the main steam pressure near the maximum permissible main steam pressure. As shown in FIG. 7, comparing the main steam pressure of the dynamically reconstruction turbine generator unit and that of the turbine generator unit with the conventional mode of operation, the main steam pressure of the conventional generator unit decreases faster with the reduction of load, but the dynamically reconstruction turbine generator unit applied in Example 9, the main steam pressure can maintain the main steam pressure at a higher pressure level, thereby effectively improving the energy efficiency of the unit in generating electricity, and the standard coal consumption decreases by 12 g/kWh on average, and the standard coal consumption in full load conditions is shown in FIG. 8.

In summary, relative to the prior art, the above examples provide a dynamically reconstruction turbine generator unit and an operation method, which divides the operating load conditions of the turbine unit, under high load conditions, the conventional high pressure cylinder 3 and medium pressure cylinder 4 are put into operation, and the high pressure compensating pressure stage 7 and/or medium pressure compensating pressure stage 8 are idled or shut down, so as to reduce the flow area and avoid the main steam pressure from dropping significantly during the sliding pressure operation of the turbine unit; under low load conditions, the high pressure compensating pressure stage 7 operates in series with the high pressure cylinder 3, and/or the medium pressure compensating pressure stage 8 operates in series with the medium pressure cylinder 4. By connecting pressure stages in series in the flow system, the work process is added and a higher unit operating pressure is maintained through pressure transfer. According to the operating load conditions, the connection state of the dynamically reconstruction turbine unit is designed to avoid the problem of a sharp drop in energy efficiency due to a drop in the operating pressure of the main steam under deep peaking of low and medium load conditions, and to improve the adaptability of the turbine unit to the operating conditions.

The above examples are only preferred examples of the present disclosure, and cannot be used to limit the scope of protection of the present disclosure, and any non-substantial changes and substitutions made by those skilled in the art on the basis of the present disclosure fall within the scope of the claimed protection of the present disclosure.

## Claims

1. , A dynamically reconstruction turbine generator unit, comprising a boiler, a first rotating shaft, a high pressure cylinder and a medium pressure cylinder, wherein a main steam outlet end of the boiler is connected to a steam inlet end pipeline of the high pressure cylinder through a main steam pipeline, the main steam pipeline is provided with a main steam valve, a steam exhaust outlet end of the high pressure cylinder is connected to a reheat steam inlet end pipeline of the boiler through a cold reheated steam pipeline, a reheated steam outlet end of the boiler is connected to the steam inlet end pipeline of the medium pressure cylinder through a reheated steam pipeline, the reheated steam pipeline is provided with a fourth valve, the high pressure cylinder and the medium pressure cylinder are arranged sequentially along the direction of the center axis of the first rotating shaft, wherein
further comprising a second rotating shaft, a high pressure compensation pressure stage and an energy conversion device, the high pressure compensation pressure stage and the energy conversion device is arranged sequentially along the direction of the center axis of the second rotating shaft, a first valve is provided between the main steam valve and the high pressure cylinder, a second valve is provided between the main steam valve and the high pressure compensation pressure stage, the steam exhaust outlet end of the high pressure compensation pressure stage is connected to the steam outlet end pipeline of the first valve through a third valve and then connected to the steam inlet end pipeline of the high pressure cylinder.

2. , A dynamically reconstruction turbine generator unit, comprising a boiler, a first rotating shaft, a high pressure cylinder and a medium pressure cylinder, wherein a main steam outlet end of the boiler is connected to a steam inlet end pipeline of the high pressure cylinder through a main steam pipeline, the main steam pipeline is provided with a main steam valve, a steam exhaust outlet end of the high pressure cylinder is connected to a reheat steam inlet end pipeline of the boiler through a cold reheated steam pipeline, a reheated steam outlet end of the boiler is connected to the steam inlet end pipeline of the medium pressure cylinder through a reheated steam pipeline, the reheated steam pipeline is provided with a fourth valve, the high pressure cylinder and the medium pressure cylinder are arranged sequentially along the direction of the center axis of the first rotating shaft, wherein
further comprising a second rotating shaft, a medium pressure compensating pressure stage and an energy conversion device, the medium pressure compensating pressure stage and the energy conversion device is arranged sequentially along the direction of the center axis of the second rotating shaft, the steam inlet end of the medium pressure compensating pressure stage is connected to the steam inlet end pipeline of the fourth valve through a fifth valve, the steam exhaust outlet end of the medium pressure compensating pressure stage is connected to the steam outlet end pipeline of the fourth valve through a sixth valve, and then connected to the steam inlet end pipeline of the medium pressure cylinder.

3. , A dynamically reconstruction turbine generator unit, comprising a boiler, a first rotating shaft, a high pressure cylinder and a medium pressure cylinder, wherein a main steam outlet end of the boiler is connected to a steam inlet end pipeline of the high pressure cylinder through a main steam pipeline, the main steam pipeline is provided with a main steam valve, a steam exhaust outlet end of the high pressure cylinder is connected to a reheat steam inlet end pipeline of the boiler through a cold reheated steam pipeline, a reheated steam outlet end of the boiler is connected to the steam inlet end pipeline of the medium pressure cylinder through a reheated steam pipeline, the reheated steam pipeline is provided with a fourth valve, the high pressure cylinder and the medium pressure cylinder are arranged sequentially along the direction of the center axis of the first rotating shaft, wherein
further comprises a second rotating shaft, a high pressure compensation pressure stage, a medium pressure compensation pressure stage and an energy conversion device, the high pressure compensation pressure stage, the medium pressure compensation pressure stage and the energy conversion device are arranged sequentially along the direction of the center axis of the second rotating shaft, a first valve is provided between the main steam valve and the high pressure cylinder, a second valve is provided between the main steam valve and the high pressure compensation pressure stage, the steam exhaust outlet end of the high pressure compensation pressure stage is connected to the steam outlet end pipeline of the first valve through a third valve, and then connected to the steam inlet end pipeline of the high pressure cylinder; the steam inlet end of the medium pressure compensation pressure stage is connected to the steam inlet end pipeline of the fourth valve through a fifth valve, the steam exhaust outlet end of the medium pressure compensation pressure stage is connected to the steam outlet end pipeline of the fourth valve through a sixth valve, and then connected to the steam inlet end pipeline of the medium pressure cylinder.

4. , The dynamically reconstruction turbine generator unit according to claim 1 or 3, wherein the loading rate of the first state reconstruction point of the turbine generator unit is set to be n%, and the flow area of the high pressure compensating pressure stage is 0.4n% to 1.5n% of the flow area of the high pressure cylinder.

5. , The dynamically reconstruction turbine generator unit according to claim 2 or 3, wherein the loading rate of the second state reconstruction point of the turbine generator unit is set to be m%, and the flow area of the medium pressure compensating pressure stage is 0.4m% to 1.5m% of the flow area of the medium pressure cylinder.

6. , A method of operating the dynamically reconstruction turbine generator unit according to claim 1 or 3, wherein
under high load conditions, the first valve is opened, the second valve and the third valve are closed, whereby the high pressure compensating pressure stage idles or shuts down; and
under low load conditions, the second valve and the third valve are opened, the first valve is closed, whereby the high pressure compensating pressure stage operates in series with the high pressure cylinder.

7. , A method of operating the dynamically reconstruction turbine generator unit according to claim 2 or 3, wherein
under high load conditions, the fourth valve is opened, the fifth valve and the sixth valve are closed, whereby the medium pressure compensating pressure stage idles or shuts down; and
under low load conditions, the fifth valve and the sixth valve are opened, the fourth valve is closed, whereby the medium pressure compensating pressure stage operates in series with the medium pressure cylinder.

8. , A method of operating the dynamically reconstruction turbine generator unit according to claim 3, wherein
under high load conditions, the first valve and the fourth valve are opened, the second valve, the third valve, the fifth valve and the sixth valve are closed, whereby the high pressure compensating pressure stage and the medium pressure compensating pressure stage are idled or shut down; and
under low load conditions, the second valve, the third valve, the fifth valve and the sixth valve are opened, the first valve and fourth valve are closed, whereby the high pressure compensating pressure stage operates in series with the high pressure cylinder, and the medium pressure compensating pressure stage operates in series with the medium pressure cylinder.

9. , A method of operating the dynamically reconstruction turbine generator unit according to any one of claims 6 to 8, wherein the high load conditions is not less than 70% of the rated load conditions.

10. , A method of operating the dynamically reconstruction turbine generator unit according to any one of claims 6 to 8, wherein the low load conditions is 10% to 70% of the rated load conditions.
